(19) Europäisches Patentamt

European Patent Office

Office européen des brevets

(11) **EP 4 749 345 A1**

(12) **EUROPEAN PATENT APPLICATION**

(43) Date of publication:
27.05.2026 Bulletin 2026/22

(21) Application number: 25216381.1

(22) Date of filing: 17.11.2025

(51) International Patent Classification (IPC):
**G02B 21/14** (2006.01)  **G02B 26/06** (2006.01)

(52) Cooperative Patent Classification (CPC):
**G02B 21/14; G01B 9/0209; G01B 11/2441; G01B 11/25; G02B 26/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 20.11.2024 KR 20240166498

(71) Applicant: Korea Research Institute of Standards and Science
Daejeon 34113 (KR)

(72) Inventors:
• KWON, Ik Hwan
10068 Gyeonggi-do (KR)
• LEE, Sang Won
30150 Sejong-si (KR)
• LEE, Tae Geol
34130 Daejeon (KR)

(74) Representative: dompatent
Partnerschaft von
Patentanwälten und Rechtsanwälten mbB
Deichmannhaus am Dom
Bahnhofsvorplatz 1
50667 Köln (DE)

(54) **FRINGE PROJECTION-BASED SPATIAL PHASE IMAGING MONITORING SYSTEM USING A SINGLE OPTICAL PATH**

(57) A fringe projection-based spatial phase imaging monitoring system using a single optical path includes: a light source; a first beam splitter that transmits a first light and reflect a second light; a tilt mirror that reflects the first light transmitted through the first beam splitter back toward the first beam splitter and varies a phase of the first light; a mirror that reflects the second light reflected by the first beam splitter back toward the first beam splitter; a lens that condenses the first and second lights reflected by the tilt mirror and the mirror; a second beam splitter that transmits the condensed first and second lights toward a sample and reflects light returning from the sample; and an image sensor that captures an image of the sample in which a fringe is formed according to a phase difference between the first and second lights.

[FIG. 1]

EP 4 749 345 A1

**Description**

**BACKGROUND**

1. Technical Field

The present disclosure relates to a fringe projection-based spatial phase imaging monitoring system using a single optical path of a Michelson interferometer.

2. Related Art

Fringe projection profilometry (FPP) is one of techniques for optically measuring a three-dimensional (3D) shape of an object, and is mainly used in non-contact precision 3D measurement systems. The core principle of the FPP involves projecting a patterned optical signal (typically a stripe pattern) onto a surface of the object, capturing the object with a camera, and reconstructing a three-dimensional shape of the surface.

Generally, in the FPP method, a periodic stripe pattern, referred to as a fringe pattern, is projected onto the surface of the object through a beam projector or another light source device. The projected pattern is distorted depending on a height or structure of the surface of the object to be measured. The distorted fringe pattern is captured by a camera, and using a phase shifting technique or other phase analysis algorithms, phase information of the distorted pattern is calculated to observe foreign substances or movement.

However, in conventional FPP methods, alignment between the light source, the camera, and the object to be measured is extremely important, and even a slight misalignment can significantly reduce accuracy. Furthermore, a frequency generation range of the fringe pattern is limited. Moreover, for highly reflective surfaces or transparent objects, the pattern may be severely distorted due to light reflection and refraction, resulting in noise. In particular, when measuring dynamic micro-scale biological samples, the conventional FPP methods that reconstruct the shape of the object using a plurality of fringe patterns face difficulties in real-time monitoring due to the need to capture multiple images, resulting in challenges related to data storage and processing speed.

The above information disclosed in the related art section was already known to the inventors before achieving embodiments of the present disclosure or is technical information acquired in the process of achieving embodiments of the present disclosure, and therefore, it may contain information that does not form the prior art that is already known to the public.

**SUMMARY**

To solve the above problems, the present disclosure is directed to providing a system that irradiates light, in which fringes are formed through a single optical path using a Michelson interferometer, onto a sample, and performs monitoring through spatial phase imaging.

A fringe projection-based spatial phase imaging monitoring system using a single optical path according to an embodiment of the present disclosure may include: a light source configured to emit light; a first beam splitter disposed on a path of the light emitted from the light source and configured to transmit a first light that is a portion of the light and reflect a second light that is a remaining portion of the light; a tilt mirror configured to reflect the first light transmitted through the first beam splitter back toward the first beam splitter and vary a phase of the first light by adjusting an angle of a reflective surface thereof; a mirror configured to reflect the second light reflected by the first beam splitter back toward the first beam splitter; a lens configured to condense the first light and the second light reflected by the tilt mirror and the mirror; a second beam splitter configured to transmit the first light and the second light condensed by the lens toward a sample unit, and to reflect light returning from the sample unit; and an image sensor disposed at a position to which light reflected by the second beam splitter is directed, and configured to capture an image of the sample unit in which a fringe is formed according to a phase difference between the first light and the second light.

According to an embodiment of the present disclosure, the fringe projection-based spatial phase imaging monitoring system may further include a moving unit configured to move the lens so that a distance between the lens and the first beam splitter is adjusted.

According to an embodiment of the present disclosure, the fringe projection-based spatial phase imaging monitoring system may further include a controller configured to adjust an angle of the tilt mirror and a position of the moving unit so that the image of the sample unit captured by the image sensor is transformed into a Fourier spectrum, and an off-axis image, in which a zero order and a first order are spaced apart from each other, is acquired.

According to an embodiment of the present disclosure, the angle of the tilt mirror may include a first angle and a second angle at which the tilt mirror rotates about an x-axis and a y-axis, respectively, the x-axis and the y-axis being perpendicular to a z-axis along which the light transmitted through the first beam splitter is incident.

According to an embodiment of the present disclosure, a fringe spacing of the fringe in the Fourier spectrum may be derived according to Equation (4) based on values of Equations (2) and (3), the values of Equations (2) and (3) being calculated by substituting a value obtained from Equation (1) and the first and second angles into Equations (2) and (3).

[Equation 1]

$$x_i = -\frac{N_x p_x}{2} + i p_{x'} \, (i = 0,1,2,\dots,N_x - 1)$$

$$y_i = -\frac{N_y p_y}{2} + j p_{y'} \, (j = 0,1,2,\dots,N_y - 1)$$

[Equation 2]

$$\Delta_{m1}(X,Y) = \sqrt{X^2 + Y^2 + d_{m1}^2}, (X_{ij} = x_i, Y_{ij} = y_j)$$

[Equation 3]

$$\Delta_{m2}(X,Y) = \sqrt{(X + d_{m2} \cdot \tan(\theta_x))^2 + (Y + d_{m2} \cdot \tan(\theta_y))^2 + d_{m2}^2}$$

[Equation 4]

$$D_s \approx \frac{\lambda}{2\left(\frac{\partial \Delta(X,Y)}{\partial X}\right)}$$

where N may denote a sensor size of the image sensor, $p$ may denote a pixel pitch of the image sensor, $d_{m1}$ may denote a distance from the mirror to the sample unit via the first beam splitter, $d_{m2}$ may denote a distance from the tilt mirror to the sample unit via the first beam splitter, $\theta_x$ may denote the first angle, $\theta_y$ may denote the second angle, $D_s$ may denote the fringe spacing, $\lambda$ may denote a wavelength of the light emitted from the light source, and $\Delta(X,Y)$ may denote a difference between values obtained from Equation (2) and Equation (3).

According to an embodiment of the present disclosure, a radius of the first order in the Fourier spectrum may be 1/2 of a radius of the zero order.

According to an embodiment of the present disclosure, the radius of the first order in the Fourier spectrum may correspond to a range of a value of the zero order in Equation (5).

[Equation 5]

$$r_{dc} \geq \frac{NA \cdot N_x p_x}{0.32 \cdot \lambda}$$

where $r_{dc}$ may denote the radius of the zero order, $NA$ may denote a numerical aperture of the lens, $N_x$ may denote an x-axis sensor size of the image sensor, $p_x$ may denote an x-axis pixel pitch of the image sensor, and $\lambda$ may denote the wavelength of the light emitted from the light source.

According to an embodiment of the present disclosure, the fringe projection-based spatial phase imaging monitoring system may further include a low wavefront distortion mirror optics (LWMO) disposed between the second beam splitter and the sample unit.

According to an embodiment of the present disclosure, the LWMO may include an entrance pupil configured to control an aperture of incident light.

According to an embodiment of the present disclosure, the second beam splitter may include a polarizing beam splitter.

According to an embodiment of the present disclosure, the sample unit may include a well plate.

According to an embodiment of the present disclosure, the fringe projection-based spatial phase imaging monitoring system may be configured to measure a cardiac organoid of a living organism accommodated in the well plate.

According to an embodiment of the present disclosure, the image sensor may include a charge-coupled device (CCD).

A fringe projection-based spatial phase imaging monitoring system using a single optical path according to an embodiment of the present disclosure may include: a light source configured to emit light; a first beam splitter disposed on a path of the light emitted from the light source and configured to transmit a first light that is a portion of the light and reflect a second light that is a remaining portion of the light; a tilt mirror configured to reflect the first light transmitted through the first beam splitter back toward the first beam splitter and vary a phase of the first light by adjusting an angle of a reflective surface thereof; a mirror configured to reflect the second light reflected by the first beam splitter back toward the first beam splitter; a lens configured to condense the first light and the second light reflected by the tilt mirror and the mirror; a second beam splitter configured to transmit the first light and the second light condensed by the lens toward a sample unit, and to reflect light transmitted through the sample unit; and an image sensor disposed at a position to which light reflected by the second beam splitter is directed, and configured to capture an image of the sample unit in which a fringe is formed according to a phase difference between the first light and the second light.

## BRIEF DESCRIPTION OF THE DRAWINGS

FIGS. 1 and 2 are schematic diagrams illustrating a fringe projection-based spatial phase imaging monitoring system using a single optical path according to an embodiment of the present disclosure.

FIG. 3 illustrates an angular configuration of a tilt mirror 130 in the fringe projection-based spatial phase imaging monitoring system 100 using a single optical path according to an embodiment of the present disclosure.

FIG. 4 illustrates coordinates of a fringe and a Fourier spectrum according to an angle of the tilt mirror 130 in the fringe projection-based spatial phase imaging monitoring system using a single optical path according to an embodiment of the present disclosure.

FIG. 5 illustrates a lens 150 and a low wavefront distortion mirror optics (LWMO) 180 in the fringe projection-based spatial phase imaging monitoring system using a single optical path according to an embodiment of the present disclosure.

FIG. 6 is a schematic diagram illustrating a fringe projection-based spatial phase imaging monitoring system using a single optical path according to another embodiment of the present disclosure.

FIG. 7 illustrates coordinates of a Fourier spectrum in the fringe projection-based spatial phase imaging monitoring system 100 using a single optical path according to an embodiment of the present disclosure.

FIG. 8 shows a photograph of the fringe projection-based spatial phase imaging monitoring system using a single optical path according to an embodiment of the present disclosure.

FIG. 9 shows a charge-coupled device (CCD) image and a time-resolved relative spatial phase image of an organoid of a living organism observed by the fringe projection-based spatial phase imaging monitoring system using a single optical path according to an embodiment of the present disclosure.

## DETAILED DESCRIPTION

The present disclosure will be clearly understood with reference to the embodiments described in detail below together with the accompanying drawings. However, the present disclosure is not limited to the embodiments set forth below, but may be implemented in various different forms. These embodiments are provided so that the disclosure is complete and fully conveys the scope of the disclosure to those skilled in the art. The present disclosure is defined only by the scope of the claims. The terminology used in the present specification is intended to describe the embodiments, and is not intended to limit the present disclosure.

Throughout the present specification, the singular form includes the plural form unless otherwise specified in the context.

It will be further understood that the terms "includes", "including", "comprises", and/or "comprising" used herein specify the presence of stated components, steps, operations, and/or devices, but do not preclude the presence or addition of one or more other components, steps, operations, and/or devices. This may indicate that the component does not exclude another component unless otherwise defined, but can further "include (or comprise)" another component.

The terms such as "first" or "second" described throughout the present specification may be merely used to distinguish corresponding components from other corresponding components, and do not limit the components in other aspects (e.g., importance or order).

The terms "portion", "-er (-or)", and the like used in this specification refer to a unit configured to perform at least one function or operation, and may be implemented as hardware, software, or a combination of hardware and software.

Throughout the specification, when one element is referred to as being "connected (or coupled) to" another element, it may not only indicate that the former element is "directly connected (or coupled) to" the latter element, but also

EP 4 749 345 A1

indicate that the former element is "indirectly connected (or coupled) to" the latter element with another element interposed therebetween.

Hereinafter, the present disclosure will be described in more detail.

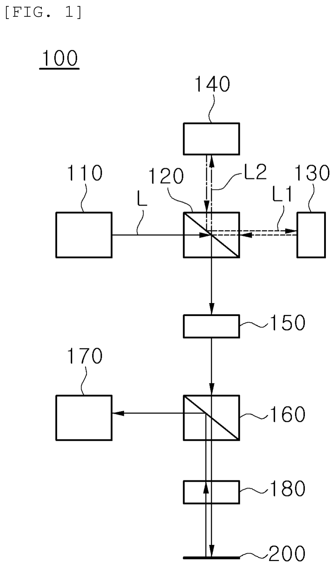

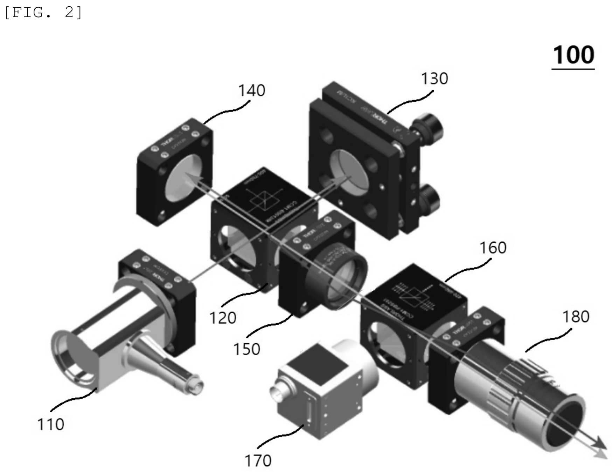

FIGS. 1 and 2 are schematic diagrams illustrating a fringe projection-based spatial phase imaging monitoring system 100 using a single optical path according to an embodiment of the present disclosure.

Referring to FIGS. 1 and 2, the system 100 according to an embodiment of the present disclosure may include a light source 110, a first beam splitter 120, a tilt mirror 130, a mirror 140, a lens 150, a second beam splitter 160, and an image sensor 170. In particular, the present disclosure is characterized in that the light source 110, the first beam splitter 120, the tilt mirror 130, and the mirror 140 form a Michelson interferometer. That is, a single optical path may be formed by arrangement of the Michelson interferometer, and a difference in the optical path may be generated by controlling the tilt mirror 130, thereby forming a fringe.

The light source 110 is configured to emit light L. The light source 110 emits the light L to illuminate a sample, thereby facilitating observation of the sample. An LED or the like may be used as an embodiment of the light source 110.

The first beam splitter (BS) 120 is disposed on a path of the light L emitted from the light source 110 and is configured to split a portion of the light L, such that the split light is reflected by the mirror 140 and the tilt mirror 130 and then guided toward a sample unit 200. The first beam splitter 120 splits the light L emitted from the light source 110 into a first light L1 and a second light L2, where the first light L1 may refer to light transmitted through the first beam splitter 120, and the second light L2 may refer to light reflected by the first beam splitter 120. The first beam splitter 120 is not particularly limited and may be a commonly used commercial beam splitter.

The tilt mirror (TM) 130 is configured to reflect the first light L1, which passes through the first beam splitter 120, back toward the first beam splitter 120, and to vary the phase of the first light L1 by adjusting the angle of a reflective surface. The reflective surface may be coated with a metal, a multilayer dielectric, or the like, and may vary the phase of the first light L1 through fine adjustment of the reflective surface. The first light L1 then forms a single optical path with the second light L2, thereby forming a fringe. Here, the fringe refers to a brightness variation caused by a phase difference that occurs when a plurality of light waves overlap in the form of an interference pattern.

The mirror (M) 140 is configured to reflect the second light L2, which is reflected by the first beam splitter 120, back toward the first beam splitter 120, and to form the single optical path with the first light L1, thereby forming a fringe. In other words, even when the mirror 140 and the tilt mirror 130 are spaced apart from the first beam splitter 120 at the same distance, it is possible to generate a phase difference between the first light L1 and the second light L2 by adjusting the angle of the reflective surface of the tilt mirror 130 that reflects the first light L1, thereby enabling adjustment of the spacing of a fringe interference pattern described below.

The lens 150 is configured to condense the first light L1 and the second light L2, which are respectively reflected by the tilt mirror 130 and the mirror 140, after the single optical path is formed at the first beam splitter 120. In an embodiment, the lens 150 may be a convex lens.

The second beam splitter 160 is configured to transmit and reflect the first light L1 and the second light L2, which are condensed by the lens 150 and form the single optical path. More specifically, the second beam splitter 160 is configured to transmit the first light L1 and the second light L2, between which a phase difference is generated, to irradiate the sample unit 200, and reflect and guide the first light L1 and the second light L2, which are reflected from the sample unit 200, toward the image sensor 170. The second beam splitter 160 may be the same component as the first beam splitter 120, but may also be a polarizing beam splitter (PBS), as required.

The image sensor 170 is disposed at a position where the first light L1 and the second light L2, reflected by the second beam splitter 160, are incident, and is configured to capture an image of the sample unit 200. More specifically, although the first light L1 and the second light L2 form the single optical path, a fringe is generated due to the phase difference, and the image of the sample unit 200 irradiated with such light may be captured by the image sensor 170. Through the captured image, variations in the spatial phase may be monitored.

Here, the image sensor 170 is not particularly limited, but in an embodiment, may be a charge-coupled device (CCD). The CCD is a sensor that detects an optical signal and converts the optical signal into an electrical signal for digitization. The CCD stores electrons generated from pixels in the form of electric charge and sequentially transfers the electrons to produce an image, thereby providing advantages such as high resolution and low noise.

The fringe projection-based spatial phase imaging monitoring system 100 using a single optical path according to an embodiment of the present disclosure may form a plurality of lights having different phases into a single optical path to generate a fringe, may irradiate the fringe onto the sample unit 200, and may image a spatial phase variation through a captured image and monitor the spatial phase variation.

More specifically, in the case where a plurality of lights having different phases, for example, two lights, are formed into a single optical path, a fringe may be generated by interference between the lights. An image obtained by irradiating such light L onto a sample unit 200 may be transformed as a Fourier spectrum, and a spatial phase variation may be identified by separating a zero order (DC term) having a frequency of 0 and first orders ($\pm 1$ terms) having a frequency difference of 1. The aforementioned separation is referred to as a spatial masking or Fourier filtering method. In other words, monitoring may be performed through an off-axis image in which the zero order and the first orders are spaced apart on coordinates of the Fourier spectrum.

A spacing between the zero order and the first orders may be adjusted by controlling an angle of the tilt mirror 130 and/or a distance between the lens 150 and the first beam splitter 120. In the system 100 according to the present disclosure, to increase resolution, precision, and measurement range, there is a need to reduce a fringe spacing, which is affected by a wavelength of light emitted from the light source 110 and an optical path difference of the light. Since the wavelength of the light L emitted from the light source 110 is fixed, the fringe spacing may be reduced by adjusting the optical path difference of the light.

The foregoing spacing adjustment may be realized by adjusting the angle of the tilt mirror 130 to change the phase of the first light L1, or by moving the lens 150.

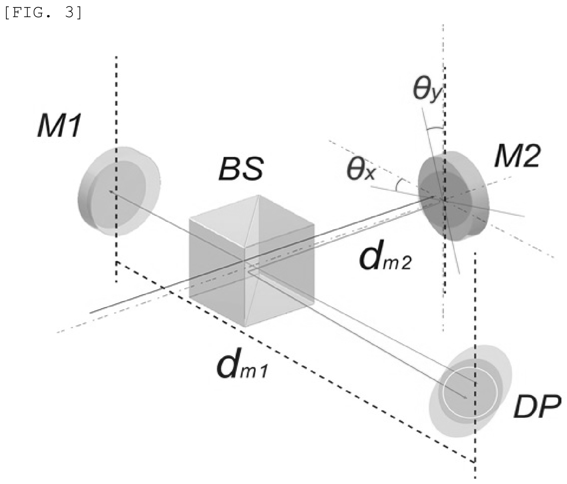

FIG. 3 illustrates an angular configuration of the tilt mirror M2 in the fringe projection-based spatial phase imaging monitoring system 100 using a single optical path according to an embodiment of the present disclosure. Referring to FIG. 3, assuming that axes perpendicular to an axis (z-axis) along which light transmitted through the first beam splitter BS is incident on the tilt mirror M2 are defined as an x-axis and a y-axis, the angle of the tilt mirror M2 may refer to rotation angles about the x-axis and the y-axis. That is, the angle of the tilt mirror M2 may include a first angle of rotation about the x-axis and a second angle of rotation about the y-axis.

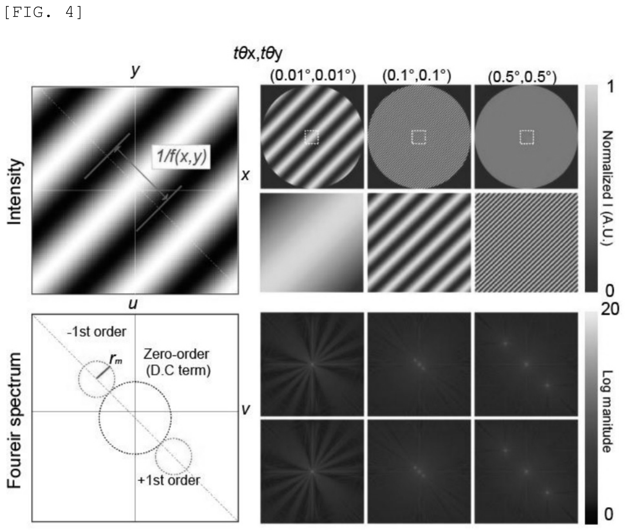

FIG. 4 illustrates coordinates of the fringe and the Fourier spectrum according to the angle of the tilt mirror 130 in the fringe projection-based spatial phase imaging monitoring system using a single optical path according to an embodiment of the present disclosure. Referring to FIG. 4, it can be seen that as the angle of the tilt mirror 130 increases, the fringe spacing becomes narrower, and the spacing between the zero order and the first orders increases on coordinates of the Fourier spectrum, thereby forming an off-axis image.

Alternatively, the fringe spacing may be reduced by adjusting the distance between the lens 150 and the first beam splitter 120. In order to reduce the fringe spacing, there is a need to increase a spatial frequency. As the angle of the tilt mirror 130 increases, an overlapping region between the first light L1 and the second light L2, where a fringe is formed, is reduced, thereby decreasing the spatial frequency and resulting in a reduced off-axis effect on coordinates of the Fourier spectrum. Therefore, adjustment of the distance between the lens 150 and the first beam splitter 120, may increase the frequency, and may also increase the overlapping region between the first light L1 and the second light L2, thereby enhancing the off-axis effect. Such distance adjustment may be achieved through use of a separate moving unit (not shown) configured to move the lens 150.

Therefore, the fringe projection-based spatial phase imaging monitoring system 100 using a single optical path according to an embodiment of the present disclosure may further include a controller (not shown) configured to adjust the angle of the tilt mirror 130 and a position of the moving unit so that the image of the sample unit 200 captured by the image sensor 170 is transformed into a Fourier spectrum and an off-axis image, in which the zero order and the first orders are spaced apart from each other, may be acquired.

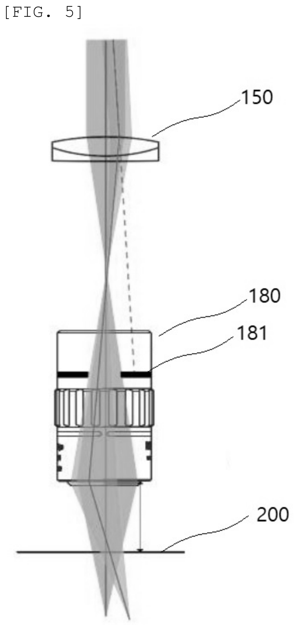

The fringe projection-based spatial phase imaging monitoring system 100 using a single optical path according to an embodiment of the present disclosure may further include a low wavefront distortion mirror optics (LWMO) 180 disposed between the second beam splitter 160 and the sample unit 200. FIG. 5 illustrates the lens 150 and the LWMO 180 in the fringe projection-based spatial phase imaging monitoring system 100 using a single optical path according to an embodiment of the present disclosure. The LWMO 180 may suppress distortion of a wavefront when light is reflected, maintain an original wavefront shape, preserve accurate phase information, and maintain coherence and quality of the light.

In addition, the LWMO 180 may further include an entrance pupil 181 provided to control an aperture of incident light. Referring to FIG. 5, the entrance pupil 181 is configured to control a range in which the light L is incident to selectively transmit required light, thereby reducing the wavefront distortion of the light, maintaining the coherence, and adjusting resolution and depth of field by controlling a numerical aperture (NA).

The sample unit 200 used in the fringe projection-based spatial phase imaging monitoring system 100 using a single optical path according to an embodiment of the present disclosure is not limited to a specific example. That is, an object to be monitored by the present disclosure may include not only inanimate objects such as foreign substances on a semiconductor, but also living organisms whose movements may be monitored.

Therefore, the sample unit 200 used in the system 100 of the present disclosure may include a well plate. The well plate is a multi-sample processing tool used for analyzing samples in fields such as life science, chemistry, and pharmaceutics.

In particular, the system 100 according to the present disclosure may measure a cardiac organoid of a living organism accommodated in the well plate. In a conventional FPP method, light is obliquely irradiated toward the sample unit 200, and the reflected light is captured by an imaging device disposed perpendicularly spaced apart from the sample unit 200. However, in the case of the well plate, due to a partition wall enclosing a sample, there arises a problem in that the light irradiated onto the sample unit 200 needs to be incident at an angle greater than a certain angle to reach the sample without being blocked by the partition wall.

In contrast, the system 100 according to the present disclosure corresponds to an invention configured to form a single optical path to irradiate the light L perpendicularly onto the sample unit 200 and simultaneously capture the same, thereby providing an advantage of being capable of capturing an image regardless of a position of the sample or a height of the partition wall of the sample unit 200.

The above-mentioned fringe projection-based spatial phase imaging monitoring system 100 using a single optical path according to an embodiment has been described as a reflection-type system that captures the light L reflected from the sample unit 200, and may also be implemented as a transmission-type system that captures the light L transmitted through the sample unit 200.

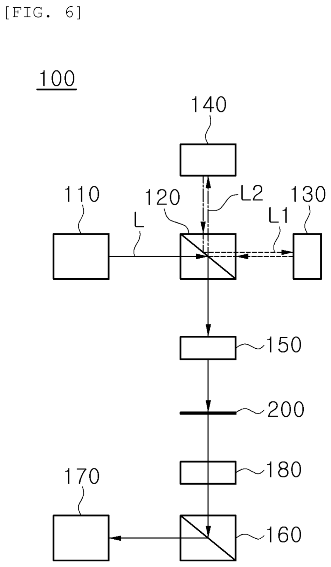

FIG. 6 is a schematic diagram illustrating a fringe projection-based spatial phase imaging monitoring system using a single optical path according to another embodiment of the present disclosure. Referring to FIG. 6, in a modified form of the fringe projection-based spatial phase imaging monitoring system 100 using a single optical path according to the foregoing embodiment, the second beam splitter 160 may be disposed parallel to the sample unit 200, such that the first light L1 and the second light L2 condensed by the lens 150 transmit through the sample unit 200 and are incident on and reflected by the second beam splitter 160 so as to form an optical path toward the image sensor 170. Such a transmission-type system may include all of the technical features of the reflection-type system described above.

As described above, the system according to the present disclosure has an advantage in that measurement can be performed with only a single fringe image, unlike a conventional fringe projection method. In addition, the system according to the present disclosure has an advantage of enabling real-time monitoring.

On coordinates of the Fourier spectrum, the spacing between the zero order and the first orders, that is, the frequency range of the fringe corresponding to a distance of peak to peak, may be determined according to the following description.

Referring to FIG. 3, a detector plane DP is a plane for detecting a fringe, and a point (X, Y) on a mesh grid coordinate of the plane may be defined by Equation (1) below.

[Equation 1]

$$x_i = -\frac{N_x p_x}{2} + i p_{x'} (i = 0,1,2, \ldots, N_x - 1)$$

$$y_i = -\frac{N_y p_y}{2} + j p_{y'} (j = 0,1,2, \ldots, N_y - 1)$$

Here, N denotes a sensor size of the image sensor, and $p$ denotes a pixel pitch of the image sensor. According to $x_i$ and $y_i$, the mesh grid coordinate (X, Y) may correspond to $X_{ij} = x_i$, $Y_{ij} = y_j$.

Referring to FIG. 3, $\Delta_{m1}(X,Y)$ corresponding to a path difference at $d_{m1}$ may be calculated as Equation (2) below by applying the Euclidean distance formula, taking into account a perpendicular distance from the point (X, Y) on the mesh grid coordinate to the mirror M1.

[Equation 2]

$$\Delta_{m1}(X,Y) = \sqrt{X^2 + Y^2 + d_{m1}^2}, (X_{ij} = x_i, Y_{ij} = y_j)$$

Here, $d_{m1}$ denotes a distance from the mirror M1 to the detector plane DP through the first beam splitter BS.

In addition, $\Delta_{m2}(X,Y)$ corresponding to a path difference at $d_{m2}$ may be calculated as Equation (3) below by applying the Euclidean distance formula, taking into account a perpendicular distance from the point (X, Y) on the mesh grid coordinate to the tilt mirror M2.

[Equation 3]

$$\Delta_{m2}(X,Y) = \sqrt{(X + d_{m2} \cdot \tan(\theta_x))^2 + (Y + d_{m2} \cdot \tan(\theta_y))^2 + d_{m2}^2}$$

Here, $d_{m2}$ denotes a distance from the tilt mirror M2 to the detector plane DP through the first beam splitter BS, $\theta_x$ denotes the first angle, and $\theta_y$ denotes the second angle.

Therefore, $\Delta(X,Y)$ corresponding to a path difference between the mirror M1 and the tilt mirror M2 for the point (X, Y) on the mesh grid coordinate may be calculated according to a difference $(\Delta_{m1}(X,Y) - \Delta_{m2}(X,Y))$ between Equation (2) and Equation (3).

When coherent lights such as the first light L1 and the second light L2 overlap, the lights interfere with each other, and an interference intensity at a specific point is determined by a phase difference between the two lights. Therefore, an interference intensity measured at a point (X, Y) on the mesh grid coordinate is determined by a phase difference (Ø) caused by a path difference between the two lights, as expressed by the following equation.

$$\emptyset = \frac{2\pi\Delta(X,Y)}{\lambda}$$

Here, $\lambda$ denotes a wavelength of light L emitted from the light source 110.

In the case where transmittance and reflectance of the first beam splitter 120 are 50:50, interference occurs with the same amplitude, and $I(X,Y)$ corresponding to an interference intensity at a specific point represented in this manner is expressed by the following equation.

$$I(X,Y) \propto cos^2\frac{\emptyset}{2} = \frac{1}{2}(\frac{\partial\Delta(X,Y)}{\lambda})$$

Assuming that the path difference uniformly and linearly varies in an x-direction on the detector plane, the fringe spacing ($D_s$), which is a distance between peaks, may be approximated by Equation (4) considering a rate of change in an optical path difference.

[Equation 4]

$$D_s \approx \frac{\lambda}{2(\frac{\partial\Delta(X,Y)}{\partial X})}$$

Here, since a spatial frequency (f) of a Michelson interference fringe corresponds to a reciprocal of the fringe spacing derived in Equation (4), as the path difference between the mirror 140 and the tilt mirror 130 increases and as the wavelength of the light L emitted from the light source 110 decreases, the spatial frequency increases and interference fringes become closer to each other.

On coordinates of the Fourier spectrum, when a radius of the first order becomes 1/2 of a radius of the zero order, the first order and the zero order do not overlap but are spaced apart from each other, thereby achieving the off-axis effect.

In particular, in the present disclosure, the radius of the first order in the Fourier spectrum may correspond to a range of the value of the zero order in Equation (5).

[Equation 5]

$$r_{dc} \geq \frac{NA \cdot N_x p_x}{0.32 \cdot \lambda}$$

Here, $r_{dc}$ denotes the radius of the zero order, $NA$ denotes the numerical aperture of the lens 150, $N_x$ denotes an x-axis sensor size of the image sensor 170, $p_x$ denotes an x-axis pixel pitch of the image sensor 170, and $\lambda$ denotes the wavelength of the light L emitted from the light source 110.

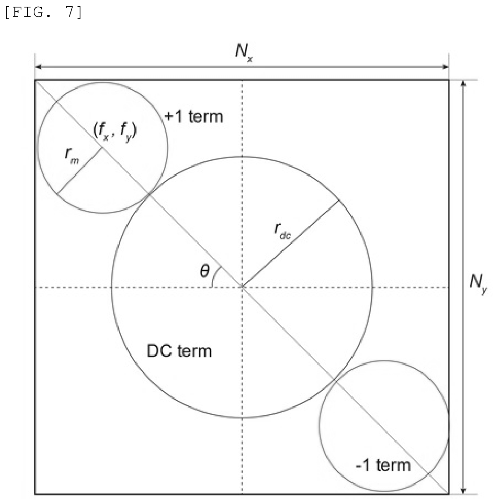

FIG. 7 illustrates coordinates of a Fourier spectrum in the fringe projection-based spatial phase imaging monitoring system 100 using a single optical path according to an embodiment of the present disclosure. Referring to FIG. 7, a fringe is arranged on coordinates of the Fourier spectrum with a spatial frequency as an axis, where $f_x$ corresponding to a horizontal axis represents a frequency in an x-direction, $f_y$ corresponding to a vertical axis represents a frequency in a y-direction, and the frequencies are obtained according to Equation (6) below.

[Equation 6]

$$f_x = \frac{i_x}{N_x \cdot p_x}$$

$$f_y = \frac{i_y}{N_y \cdot p_y}$$

Here, $i$ denotes an index of the Fourier spectrum corresponding to a frequency bin, N denotes a sensor size of the image sensor 170, and $p$ denotes a pixel pitch of the image sensor 170. $i$ ranges from $-\frac{N}{2}$ to $\frac{N}{2} - 1$ in each of the x and y directions.

Referring to FIG. 7, the zero order (DC term) represents an average intensity or brightness of an image. As the position moves farther from a center (origin) of the zero order, the spatial frequency increases. Hence, a higher frequency is located at a greater distance from the origin. A Fourier filtering method refers to removing the zero order and noise and focusing on the first order ($\pm 1$ term). Therefore, the first order needs to be separated from the zero order without overlapping the zero order, it is important to form the first order to have an optimal radius.

Generally, the radius of the first order is half of that of the zero order, which may be expressed in a Cartesian coordinate system as shown in Equations (7) and (8) below.

[Equation 7]

$$\sqrt{f_x^2 + f_y^2} = 3r_m$$

[Equation 8]

$$r_m \le \frac{-0.5\left(N_x + N_y\right) + \sqrt{2\left(N_x^2 + N_y^2\right) + 0.5 N_x N_y}}{7}$$

Here, $r_m$ denotes the radius of the first order.

According to Equation (8), the radius of the first order may be determined by a field of view (FOV) and a pixel size of the image sensor 170.

In addition, to define the radius of the first order, the radius of the zero order based on Abbe's resolution limit using a Fourier spectrum is utilized. An optical resolution image (d) can be expressed by Abbe's law as shown in Equation (9) below.

[Equation 9]

$$d = \frac{0.61 \cdot \lambda}{NA}$$

Here, NA denotes a numerical aperture.

According to Equation (9), a minimum distance between two points in a point spread function (PSF) represents a limit at which two adjacent points can be distinguished from each other in real space. Such resolution determines a highest spatial frequency that the system can transmit, which may be expressed as a frequency in the Fourier spectrum and is represented by Equation (10).

[Equation 10]

$$f = \frac{1}{2d} = \frac{NA}{0.32 \cdot \lambda}$$

Accordingly, when Equations (6) and (7) are applied to Equation (10) and Equation (10) is matched with the index value of the Fourier spectrum, the relation may be expressed as Equation (11).

[Equation 11]

$$r_{dc} \geq \frac{NA \cdot N_x p_x}{0.32 \cdot \lambda}$$

In Equation (11), since the radius of the first order corresponds to 1/2 of the radius of the zero order, a minimum value of the radius of the first order may be obtained, and a frequency range of the fringe capable of separating the zero order and the first order may be determined.

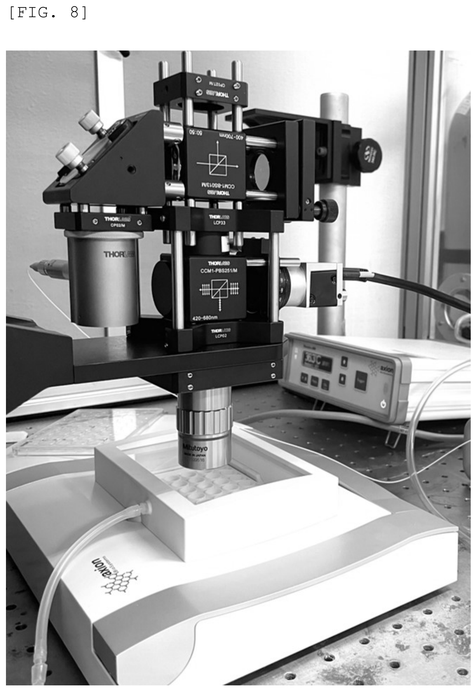

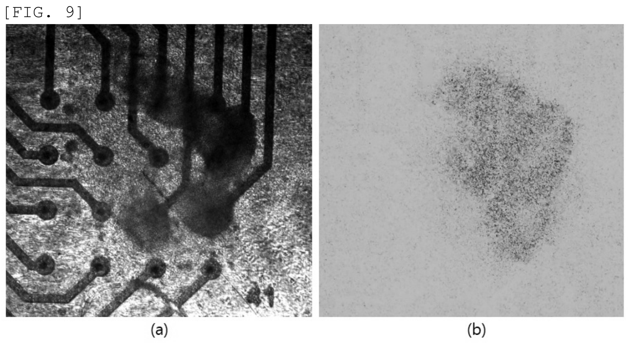

FIG. 8 shows a photograph of the fringe projection-based spatial phase imaging monitoring system using a single optical path according to an embodiment of the present disclosure. FIG. 9 shows a charge-coupled device (CCD) image and a time-resolved relative spatial phase image of an organoid of a living organism observed using the fringe projection-based spatial phase imaging monitoring system using a single optical path according to an embodiment of the present disclosure.

Referring to FIG. 8, the present disclosure is economical because an organoid of a living organism may be observed in real time through a combination of a simple configuration compared to existing devices. In addition, referring to FIG. 9, in existing devices, when an organoid of a living organism is to be observed, a separate electrode needs to be attached, and only a signal of a portion in contact with the corresponding electrode can be measured (see FIG. 9(a)), whereas in the present disclosure, the organoid may be observed regardless of a position of the electrode, and even data having low intensity and high scattering may be observed through a phase change (see FIG. 9(b)).

A fringe projection-based spatial phase imaging monitoring system using a single optical path according to an embodiment of the present disclosure may be economical because monitoring may be performed with a simple combination of components compared to existing devices.

In addition, the present disclosure has an advantage in that monitoring may be performed only by adjusting an angle of a tilt mirror and/or moving a lens.

Furthermore, the present disclosure has an advantage in that not only an inanimate object such as a foreign substance on a semiconductor but also the motion of a living organism may be monitored.

Furthermore, the system according to the present disclosure has an advantage in that measurement may be performed with only one fringe image unlike existing fringe projection methods.

In addition, the system according to the present disclosure has an advantage in that real-time monitoring may be performed.

In addition, the present disclosure has an advantage in that, during measurement of an organoid of a living organism, observation may be performed regardless of a position of an electrode, and even data having low intensity and high scattering may be observed through a phase change.

The effects obtainable in the present disclosure are not limited to the above-mentioned effects, and other effects that are not mentioned may be clearly understood by those skilled in the art to which the present disclosure belongs, from the description herein.

Although the present disclosure has been described with reference to specific embodiments, the present disclosure is not limited thereto, and various modifications and variations are possible within the technical idea of the present disclosure and within the equivalent scope of the claims to be described below by those skilled in the art to which the present disclosure pertains.

**Claims**

1. A fringe projection-based spatial phase imaging monitoring system using a single optical path, comprising:

a light source configured to emit light;
a first beam splitter disposed on a path of the light emitted from the light source and configured to transmit a first light that is a portion of the light and reflect a second light that is a remaining portion of the light;
a tilt mirror configured to reflect the first light transmitted through the first beam splitter back toward the first beam splitter and vary a phase of the first light by adjusting an angle of a reflective surface thereof;
a mirror configured to reflect the second light reflected by the first beam splitter back toward the first beam splitter;
a lens configured to condense the first light and the second light reflected by the tilt mirror and the mirror;
a second beam splitter configured to transmit the first light and the second light condensed by the lens toward a sample unit, and to reflect light returning from the sample unit; and
an image sensor disposed at a position to which light reflected by the second beam splitter is directed, and configured to capture an image of the sample unit in which a fringe is formed according to a phase difference between the first light and the second light.

2. The fringe projection-based spatial phase imaging monitoring system of claim 1, further comprising a moving unit configured to move the lens so that a distance between the lens and the first beam splitter is adjusted.

3. The fringe projection-based spatial phase imaging monitoring system of claim 2, further comprising a controller configured to adjust an angle of the tilt mirror and a position of the moving unit so that the image of the sample unit captured by the image sensor is transformed into a Fourier spectrum, and an off-axis image, in which a zero order and a first order are spaced apart from each other, is acquired.

4. The fringe projection-based spatial phase imaging monitoring system of claim 3, wherein the angle of the tilt mirror includes a first angle and a second angle at which the tilt mirror rotates about an x-axis and a y-axis, respectively, the x-axis and the y-axis being perpendicular to a z-axis along which the light transmitted through the first beam splitter is incident.

5. The fringe projection-based spatial phase imaging monitoring system of claim 4, wherein a fringe spacing of the fringe in the Fourier spectrum is derived according to Equation (4) based on values of Equations (2) and (3), the values of Equations (2) and (3) being calculated by substituting a value obtained from Equation (1) and the first and second angles into Equations (2) and (3).

[Equation 1]

$$x_i = -\frac{N_x p_x}{2} + i p_{x'} (i = 0,1,2, \dots, N_x - 1)$$

$$y_i = -\frac{N_y p_y}{2} + j p_{y'} (j = 0,1,2, \dots, N_y - 1)$$

[Equation 2]

$$\Delta_{m1}(X,Y) = \sqrt{X^2 + Y^2 + d_{m1}^2}, (X_{ij} = x_i, Y_{ij} = y_j)$$

[Equation 3]

$$\Delta_{m2}(X,Y) = \sqrt{(X + d_{m2} \cdot \tan(\theta_x))^2 + (Y + d_{m2} \cdot \tan(\theta_y))^2 + d_{m2}^2}$$

[Equation 4]

$$D_s \approx \frac{\lambda}{2\left(\frac{\partial \Delta(X,Y)}{\partial X}\right)}$$

where N denotes a sensor size of the image sensor, p denotes a pixel pitch of the image sensor, $d_{m1}$ denotes a distance from the mirror to the sample unit via the first beam splitter, $d_{m2}$ denotes a distance from the tilt mirror to the sample unit via the first beam splitter, $\theta_x$ denotes the first angle, $\theta_y$ denotes the second angle, $D_s$ denotes the fringe spacing, $\lambda$ denotes a wavelength of the light emitted from the light source, and $\Delta(X,Y)$ denotes a difference between values obtained from Equation (2) and Equation (3).

6. The fringe projection-based spatial phase imaging monitoring system of claim 5, wherein a radius of the first order in the Fourier spectrum is 1/2 of a radius of the zero order.

7. The fringe projection-based spatial phase imaging monitoring system of claim 6, wherein the radius of the first order in the Fourier spectrum corresponds to a range of a value of the zero order in Equation (5).

[Equation 5]

$$r_{dc} \geq \frac{NA \cdot N_x p_x}{0.32 \cdot \lambda}$$

where $r_{dc}$ denotes the radius of the zero order, $NA$ denotes a numerical aperture of the lens, $N_x$ denotes an x-axis sensor size of the image sensor, $p_x$ denotes an x-axis pixel pitch of the image sensor, and A denotes the wavelength of the light emitted from the light source.

8. The fringe projection-based spatial phase imaging monitoring system of claim 1, further comprising a low wavefront distortion mirror optics (LWMO) disposed between the second beam splitter and the sample unit.

9. The fringe projection-based spatial phase imaging monitoring system of claim 8, wherein the LWMO comprises an entrance pupil configured to control an aperture of incident light.

10. The fringe projection-based spatial phase imaging monitoring system of claim 1, wherein the second beam splitter comprises a polarizing beam splitter.

11. The fringe projection-based spatial phase imaging monitoring system of claim 1, wherein the sample unit comprises a well plate.

12. The fringe projection-based spatial phase imaging monitoring system of claim 11, configured to measure a cardiac organoid of a living organism accommodated in the well plate.

13. The fringe projection-based spatial phase imaging monitoring system of claim 1, wherein the image sensor comprises a charge-coupled device (CCD).

14. A fringe projection-based spatial phase imaging monitoring system using a single optical path, comprising:

a light source configured to emit light;
a first beam splitter disposed on a path of the light emitted from the light source and configured to transmit a first light that is a portion of the light and reflect a second light that is a remaining portion of the light;
a tilt mirror configured to reflect the first light transmitted through the first beam splitter back toward the first beam splitter and vary a phase of the first light by adjusting an angle of a reflective surface thereof;
a mirror configured to reflect the second light reflected by the first beam splitter back toward the first beam splitter;
a lens configured to condense the first light and the second light reflected by the tilt mirror and the mirror;
a second beam splitter configured to transmit the first light and the second light condensed by the lens toward a sample unit, and to reflect light transmitted through the sample unit; and
an image sensor disposed at a position to which light reflected by the second beam splitter is directed, and configured to capture an image of the sample unit in which a fringe is formed according to a phase difference between the first light and the second light.

[FIG. 1]

<u>100</u>

[FIG. 2]

[FIG. 3]

[FIG. 4]

[FIG. 5]

[FIG. 6]

[FIG. 7]

[FIG. 8]

[FIG. 9]

(a)

(b)

Europäisches Patentamt

European Patent Office

Office européen des brevets

## EUROPEAN SEARCH REPORT

**Application Number**

EP 25 21 6381

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHOU XING ET AL: "Single-frame fringe pattern analysis with synchronous phase-shifting based on polarization interferometry phase measuring deflectometry (PIPMD)", OPTICS AND LASERS IN ENGINEERING ELSEVIER, AMSTERDAM, NL, vol. 181, 2 July 2024 (2024-07-02), XP087577955, ISSN: 0143-8166, DOI: 10.1016/J.OPTLASENG.2024.108406 [retrieved on 2024-07-02] | 1,2,8-14 | INV. G02B21/14 G02B26/06 |
| A | * the whole document * | 3-7 | |
| X | WO 2024/171584 A1 (HAMAMATSU PHOTONICS KK [JP]) 22 August 2024 (2024-08-22) | 1,8-14 | |
| A | * paragraphs [0044] - [0048], [0061]; figures 3, 5 * | 2-7 | |
| A | SHYH-TSONG LIN ET AL: "Phase-shifting interference microscope with extendable field of measurement", JOURNAL OF OPTICS INSTITUTE OF PHYSICS PUBLISHING, BRISTOL GB, vol. 20, no. 4, 9 March 2018 (2018-03-09), page 045605, XP020325774, ISSN: 2040-8986, DOI: 10.1088/2040-8986/AAB02A [retrieved on 2018-03-09] * the whole document * | 1-14 | TECHNICAL FIELDS SEARCHED (IPC) G02B G01B |

-/--

The present search report has been drawn up for all claims

| Place of search | Date of completion of the search | Examiner |
|---|---|---|
| Munich | 26 February 2026 | Kaiser, Peter |

page 1 of 2

**EUROPEAN SEARCH REPORT**

Europäisches
Patentamt
European
Patent Office
Office européen
des brevets

Application Number

EP 25 21 6381

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | M. STROJNIK ET AL: "Lateral Shear Interferometers", 1 January 2007 (2007-01-01), OPTICAL SHOP TESTING WILEY & SONS, US, PAGE(S) 122 - 184, XP009523373, ISBN: 9780471484042 * paragraph bridging p. 123 and p. 124; figure 4.2 * | 8,9 | |
| A | ANNA, T. ET AL: "Sinusoidal fringe projection system based on compact and non-mechanical scanning low-coherence Michelson interferometer for three-dimensional shape measurement", OPTICS COMMUNICATIONS ELSEVIER, AMSTERDAM, NL, vol. 282, no. 7, 1 April 2009 (2009-04-01), pages 1237-1242, XP025942854, ISSN: 0030-4018, DOI: 10.1016/J.OPTCOM.2008.11.080 [retrieved on 2009-02-12] * the whole document * | 1-14 | |

TECHNICAL FIELDS
SEARCHED (IPC)

The present search report has been drawn up for all claims

| Place of search | Date of completion of the search | Examiner |
|---|---|---|
| Munich | 26 February 2026 | Kaiser, Peter |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 25 21 6381

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2026

| Patent document cited in search report | Publication date | Patent family member(s) | Publication date |
|---|---|---|---|
| WO 2024171584 A1 | 22-08-2024 | CN 120693558 A | 23-09-2025 |
| | | EP 4657135 A1 | 03-12-2025 |
| | | JP 7776460 B2 | 26-11-2025 |
| | | JP 2024117325 A | 29-08-2024 |
| | | KR 20250145026 A | 13-10-2025 |
| | | WO 2024171584 A1 | 22-08-2024 |

EPO FORM P0459

For more details about this annex : see Official Journal of the European Patent Office, No. 12/82